(19) Europäisches Patentamt
European Patent Office
Office européen des brevets

(11) **EP 2 344 850 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **09745017.5**

(22) Anmeldetag: **27.10.2009**

(51) Int Cl.:
*G01F 23/296* *(2006.01)*　　*G01N 9/00* *(2006.01)*
*G01N 11/16* *(2006.01)*　　*G01N 29/02* *(2006.01)*

(86) Internationale Anmeldenummer:
**PCT/EP2009/064130**

(87) Internationale Veröffentlichungsnummer:
**WO 2010/054931 (20.05.2010 Gazette 2010/20)**

(54) **VORRICHTUNG ZUR BESTIMMUNG UND/ODER ÜBERWACHUNG EINER PROZESSGRÖßE**

DEVICE FOR DETERMINING AND/OR MONITORING A PROCESS VARIABLE

DISPOSITIF POUR DÉTERMINER ET/OU SURVEILLER UN PARAMÈTRE DE TRAITEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **14.11.2008 DE 102008043764**

(43) Veröffentlichungstag der Anmeldung:
**20.07.2011 Patentblatt 2011/29**

(73) Patentinhaber: **Endress+Hauser SE+Co. KG
79689 Maulburg (DE)**

(72) Erfinder:
• **DREYER, Volker
79541 Lörrach (DE)**
• **LOPATIN, Sergej
79540 Lörrach (DE)**
• **SCHMIDT, Oliver
77756 Hausach (DE)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
**DE-A1-102004 033 311　　GB-A- 2 351 805
US-A- 4 594 584　　　　　US-A1- 2004 056 612**

**Beschreibung**

Die Erfindung bezieht sich auf eine Vorrichtung zur Bestimmung und/oder Überwachung mindestens einer Prozessgröße eines Mediums, mit mindestens einem Gehäuse, mit mindestens einer mechanisch schwingfähigen Einheit, und mit mindestens einer Wandlereinheit, welche die mechanisch schwingfähige Einheit zu mechanischen Schwingungen anregt und welche von der mechanisch schwingfähigen Einheit mechanische Schwingungen empfängt, wobei die Wandlereinheit derartig zwischen mindestens zwei der Einspannung dienenden Gehäuseelementen angeordnet und eingespannt ist, dass mindestens längs einer imaginären Achse ein vorgebbarer Druck auf die Wandlereinheit einwirkt. Bei der Prozessgröße handelt es sich beispielsweise um den Füllstand, die Dichte oder die Viskosität eines Mediums, welches beispielsweise eine Flüssigkeit, ein Gas oder ein Schüttgut ist.

Im Stand der Technik sind zur Bestimmung des Füllstands und weiterer Prozessgrößen eines Mediums so genannte Schwinggabeln (z.B. EP 0 444 173 B1), Einstäbe (z.B. WO 2004/094964 A1) oder auch Membranschwinger bekannt. Ausgenutzt wird bei den jeweiligen Messungen, dass die Kenngrößen der mechanischen Schwingungen (Schwingungsamplitude, Resonanzfrequenz, Phasengang über Frequenz) der schwingfähigen Einheit vom Kontakt mit dem Medium und auch von dessen Eigenschaften abhängen. So nimmt beispielsweise die Frequenz oder die Amplitude der Schwingungen ab, wenn insbesondere ein flüssiges Medium die schwingfähige Einheit erreicht und zumindest teilweise bedeckt. Das flüssige Medium wirkt auf den schwingenden Körper des Sensors - d.h. z.B. auf die Schwinggabel bzw. den Einstab bzw. die Membran - einerseits als mitbewegte Masse, weshalb die Schwingfrequenz sinkt, und andererseits als mechanischer Dämpfer, weshalb die Schwingungsamplitude abnimmt. Daher lässt sich aus der Abnahme der Schwingungsfrequenz bzw. der Amplitude darauf schließen, dass das Medium einen von der Ausgestaltung und der Position der Anbringung der Vorrichtung abhängigen Füllstand erreicht hat. Weiterhin ist die Schwingungsfrequenz auch beispielsweise von der Viskosität des Mediums abhängig (siehe z.B. EP 1 325 301).

Häufig werden die zuvor beschriebenen Sensoren als Grenzstandschalter verwendet. Handelt es sich bei der Prozessgröße beispielsweise um den Füllstand, so erzeugt der Sensor ein Signal, welches anzeigt, dass der Füllstand, der durch die Ausgestaltung des Sensors und dessen Anbringungsort vorgegeben ist, erreicht oder unterschritten wurde.

Solche mechanischen oder auf der Vibronik beruhende Grenzstandschalter oder Messgeräte für Flüssigkeiten und Schüttgüter verfügen üblicherweise über einen mechanischen Resonator (die schwingfähige Einheit) und einen Antrieb. Der Resonator bestimmt die Resonanzeigenschaften des Sensors und reagiert auf das Medium mit einer Frequenz- und/oder mit einer Amplitudenänderung. Der Antrieb erzeugt die mechanischen Schwingungen im Resonator und dient als ein Feedback-Element für die Elektronik, die den Sensor elektrisch steuert. Somit lassen sich die Bezeichnungen Antrieb und Wandlereinheit im Wesentlichen synonym gebrauchen.

Die Antriebe verfügen zumeist über piezoelektrische Elemente in Form von gestapelten Scheiben oder Ringen. Solche Piezoelemente bestehen beispielsweise aus Keramik Blei-Zirkonat-Titanat (PZT). Ggf. sind noch keramische Isolierscheiben vorgesehen, welche die Piezoelemente galvanisch vom Gehäuse trennen. Für solche Piezoantriebe ist eine mechanische Vorspannung erforderlich, welche der kraftschlüssigen Verbindung der Wandlereinheit mit einem mechanischen Resonator, d.h. mit der mechanisch schwingfähigen Einheit, dienen. Falls die mechanische Vorspannung nachlässt oder nicht mehr hoch genug ist, kann der Sensor ausfallen und beispielsweise keine Schaltsignale mehr erzeugen. Daher muss die mechanische Vorspannung im Spezifikationsbereich des Sensors in gewissen Grenzen bleiben.

Typische Antriebe für Vibrationsgrenzschalter sind beispielsweise in folgenden Dokumenten beschrieben: DE 1773 815, DE 3348 119, DE 4118 793, DE 39 31453, DE 1002 3302, DE 42 01360, DE 10 2004 009 495, DE 10 2006 046 251, DE 103 21 025, DE 101 29 556 oder EP 1 134 038.

Besonders kritisch ist das Temperaturverhalten eines Stapelpiezoantriebs. Die keramischen Werkstoffe weisen im Allgemeinen deutlich geringere Temperaturausdehnungskoeffizienten auf als die Stahllegierungen, welche für das den Stapelantrieb und beispielsweise auch die Rückkoppelelektronik umgebende Gehäuse verwendet werden. Bei erhöhten Temperaturen dehnt sich ein metallisches Sensorgehäuse und die metallischen Befestigungselemente mehr aus als die Keramik im Piezostapel. Dies führt zum Entspannen des Antriebs und in der Folge zum Sensorausfall.

Die Wandlereinheit ist dabei in Richtung des Mediums bzw. des Prozesses gegen eine Membran vorgespannt. Die Membran ist dabei beispielsweise die mechanisch schwingfähige Einheit selbst oder an ihr sind beispielsweise die beiden Gabelzinken einer Schwinggabel befestigt.

In einer Variante ist es durch die Nutzung der Federeigenschaften der Membran möglich, die Vorspannung im Antrieb in bestimmten Temperaturbereichen ungefähr konstant zu halten. Dies funktioniert beispielsweise gut in einem Temperaturbereich von -40°C bis 150°C für spezielle Membranen mit einem Durchmesser größer als 30 mm und einer Dicke von etwa 1 mm.

Die Aufgabe der Erfindung besteht darin, ein Messgerät vorzuschlagen, bei welchem die mechanische Vorspannung bei hohen Temperaturen im Wesentlichen erhalten bleibt.

Aus der GB2351805 ist ein vibronischer Grenzstandhalter mit einem Stapelantrieb und einem Halteblock mit einem druckabhängigen Ausdehnungskoeffizienten. Auf diese Weise kann durch Einstellung des Drucks auf den Halteblock eine temperaturbedingte Änderung der Resonanzfrequenz der schwingfähigen Einheit kompensiert werden.

Die DE102004033311A1 beschreibt einen vibronischen Sensor mit Stapelantrieb. Die piezoelektrischen Elemente werden von einem durch einen Stempel begrenzten Stab, welcher die piezoelektrischen Elemente der Antriebs-/Empfangseinheit durchdringt, und eine oberhalb der piezoelektrischen Elemente angeordnete Druckscheibe eingespannt

Die US 2004/056612 A1 beschreibt einen vibronischen Sensor mit einem Stapelantrieb, der zwischen einem als Membran dienenden Gehäuseboden und einer Druckschraube angeordnet und eingespannt ist.

Die Erfindung löst die Aufgabe dadurch, dass mindestens ein Ausgleichselement vorhanden ist, wobei der Temperaturausdehnungskoeffizient des Ausgleichselements und/oder die Höhe des Ausgleichselements längs der imaginären Achse derartig gewählt sind/ist, dass eine Temperaturbedingte Ausdehnung des Ausgleichselements längs der imaginären Achse während einer Temperaturbedingen Ausdehnung eines zu kompensierenden Gehäuseelements, welches einen Abstand zwischen den der Einspannung dienenden Gehäuseelementen längs der imaginären Achse bestimmt, und durch welche temperaturbedinge Ausdehnung des zu kompensierenden Gehäuseelements sich eine Änderung eines Abstands zwischen den beiden Gehäuseelementen ergibt, dazu führt, dass der längs der imaginären Achse auf die Wandlereinheit einwirkende Druck im Wesentlichen größer als oder gleich einem vorgebbaren Vorspannungs-Grenzwert ist. Der erfindungsgemäße Sensor verfügt somit über ein Ausgleichselement, das sich unter Temperatureinfluss ausdehnt und dafür sorgt, dass der auf der Wandlereinheit lastende Druck und damit einhergehend die Vorspannung nicht unter einen Grenzwert fällt.

Mit anderen Worten: Durch die Temperaturänderung und das damit verbundene Ausdehnungsverhalten des Gehäuses ergibt sich eine Änderung des Abstands zwischen zwei Gehäuseelementen, die der Vorspannung der Wandlereinheit dienen. Da das Material der Wandlereinheit einen anderen Temperaturkoeffizienten aufweist, zeigt die Wandlereinheit ein anderes Ausdehnungsverhalten. Hierdurch kann es im Stand der Technik dazu kommen, dass die Wandlereinheit nach einer Temperaturänderung für einen gewissen Zeitraum nicht mehr vorgespannt ist, da der Abstand zwischen den der Einspannung dienenden Gehäuseelementen für die - noch nicht passende - Längenänderung der Wandlereinheit zu groß ist. Erfindungsgemäß zeigt das Ausgleichselement ein solches Ausdehnungsverhalten, dass es die Wandlereinheit an die Ausdehnung des Gehäuses und damit an den geänderten Abstand zwischen den Gehäuseelementen anpasst. Dabei ist die Ausdehnung eines Gehäuseelements zu kompensieren. Dies ist das Element, welches insbesondere den Abstand zwischen den der Einspannung dienenden Elementen bestimmt.

Im Stand der Technik besteht die zu lösende Problematik somit darin, dass das Gehäuse bzw. der Abschnitt oder das Element des Gehäuses, welcher den Abstand zwischen den beiden Elementen, zwischen denen die Wandlereinheit eingespannt ist, definiert, sich unter der Einwirkung der Temperatur schneller ausdehnt als die Elemente der Wandlereinheit bzw. insbesondere schneller als die aus einer Keramik bestehenden Elemente wie z.B. die piezoelektrischen Elemente der Wandlereinheit. Das Ausgleichselement kompensiert dieses unterschiedliche Ausdehnungsverhalten und sorgt quasi dafür, dass die Wandlereinheit an diese Ausdehnungsänderung angepasst wird. Dafür ist das Ausgleichselement aus einem passenden Material und in einer passenden Dimensionierung auszugestalten.

Erfindungsgemäß ist/sind der Temperaturausdehnungskoeffizient des Ausgleichselements und/oder die Höhe des Ausgleichselements längs der imaginären Achse derartig gewählt, dass die Temperaturbedingte Ausdehnung des Ausgleichselements längs der imaginären Achse im Wesentlichen gleich der Temperaturbedingen Ausdehnung des zu kompensierenden Gehäuseelements längs der imaginären Achse ist, und

dass das Ausgleichselement ein solches Ausdehnungsverhalten zeigt, dass es die Wandlereinheit an die Ausdehnung des Gehäuses und damit an den geänderten Abstand zwischen den Gehäuseelementen anpasst.

Eine Ausgestaltung beinhaltet, dass der Temperaturausdehnungskoeffizient des Ausgleichselements im Wesentlichen gleich oder größer als der Temperaturausdehnungskoeffizient des zu kompensierenden Gehäuseelements ist.

Eine Ausgestaltung sieht vor, dass die Wandlereinheit längs eines Bolzens zwischen einer Membran und einer Mutter oder zwischen einem Auflagebereich und einer Mutter angeordnet und eingespannt ist, und dass das zu kompensierende Gehäuseelement der Bolzen ist. Die Wandlereinheit weist dabei vorzugsweise piezoelektrische Elemente auf, welche z.B. in Form von Ringen auf dem Bolzen angeordnet sind.

Eine Ausgestaltung beinhaltet, dass die Wandlereinheit zwischen einer Membran und einem Joch angeordnet und eingespannt ist, und dass das zu kompensierende Gehäuseelement ein Gehäuseabschnitt zwischen der Membran und einer Auflage des Jochs am Gehäuse parallel zur imaginären Achse ist. Die Wandlereinheit ist dabei insbesondere in Art eines monolithischen Blocks ausgestaltet.

Eine Ausgestaltung sieht vor, dass das Ausgleichselement längs der imaginären Achse zwischen den mindestens zwei Gehäuseelementen, zwischen denen die Wandlereinheit angeordnet ist, angeordnet ist.

Eine Ausgestaltung beinhaltet, dass die Höhe längs der imaginären Achse des Ausgleichselements im Wesentlichen durch folgende Formel gegeben ist: $HA = HW * \dfrac{\alpha1 - \alpha W}{\alpha A - \alpha1}$, dabei ist HA die Höhe des Ausgleichselements längs der imaginären Achse, dabei ist HW die Höhe der Wandlereinheit längs der imaginären Achse, dabei ist a1 der Temperaturausdehnungskoeffizient des zu kompensierenden Gehäuseelements, dabei ist aW der Temperaturausdehnungskoeffizient des Wandlerelements, und dabei ist aA der Temperaturausdehnungskoeffizient des Ausgleichselements.

Eine Ausgestaltung sieht vor, dass die Wandlereinheit als Stapel ausgestaltet ist, welcher mindestens ein piezoelektrisches Element aufweist.

Eine Ausgestaltung beinhaltet, dass mindestens ein Isolierelement vorgesehen ist. Dieses Isolierelement ist beispielsweise ein Bestandteil des Wandlerelements und/oder das Isolierelement ist beispielsweise zwischen dem Wandlerelement und der Membran angeordnet. Das Isolierelement, welches beispielsweise der galvanischen Trennung dient, ist dabei insbesondere ebenfalls zwischen den mindestens zwei der Einspannung dienenden Gehäuseelementen angeordnet.

Eine Ausgestaltung sieht vor, dass die Wandlereinheit mindestens eine Lötfahne aufweist.

Eine Ausgestaltung beinhaltet, dass die Höhe längs der imaginären Achse des Ausgleichselements im Wesentlichen durch folgende Formel gegeben ist:

$$HA = \frac{(HP + HI + HL) * \alpha1 - (HP * \alpha P + HI * \alpha I + HL * \alpha L)}{\alpha A - \alpha1},$$ dabei ist HA die Höhe des Ausgleichselements längs der imaginären Achse, dabei ist HP die Höhe des mindestens einen piezoelektrischen Elements längs der imaginären Achse, dabei ist HI die Höhe des mindestens einen Isolierelements längs der imaginären Achse, dabei ist HL die Höhe der mindestens einen Lötfahne längs der imaginären Achse, dabei ist a1 der Temperaturausdehnungskoeffizient des zu kompensierenden Gehäuseelements, dabei ist aP der Temperaturausdehnungskoeffizient des mindestens einen piezoelektrischen Elements, dabei ist $\alpha I$ der Temperaturausdehnungskoeffizient des mindestens einen Isolierelements, dabei ist $\alpha L$ der Temperaturausdehnungskoeffizient der mindestens einen Lötfahne, und dabei ist aA der Temperaturausdehnungskoeffizient des Ausgleichselements.

Die mechanisch schwingfähige Einheit ist beispielsweise eine Schwinggabel, ein Einstab oder eine biegemodefähige Membran, wobei die Prozessgröße beispielsweise der Füllstand, die Dichte oder die Viskosität eines Mediums ist, welches beispielsweise eine Flüssigkeit oder ein Schüttgut ist.

Die Erfindung wird anhand der nachfolgenden Zeichnungen näher erläutert. Es zeigt:

Fig. 1: eine schematische Darstellung der Anwendung eines erfindungsgemäßen Messgerätes,

Fig. 2: eine schematische Darstellung eines Teiles eines Sensors gemäß dem Stand der Technik in einer ersten Variante,

Fig. 3: eine schematische Darstellung eines Teiles eines Sensors gemäß dem Stand der Technik in einer zweiten Variante,

Fig. 4: eine schematische Darstellung eines Teils eines erfindungsgemäßen Sensors in Anlehnung an die zweite Variante der Fig. 3, und

Fig. 5: eine Darstellung der Fig. 4 mit Vereinfachungen für die Berechung der auftretenden Größen.

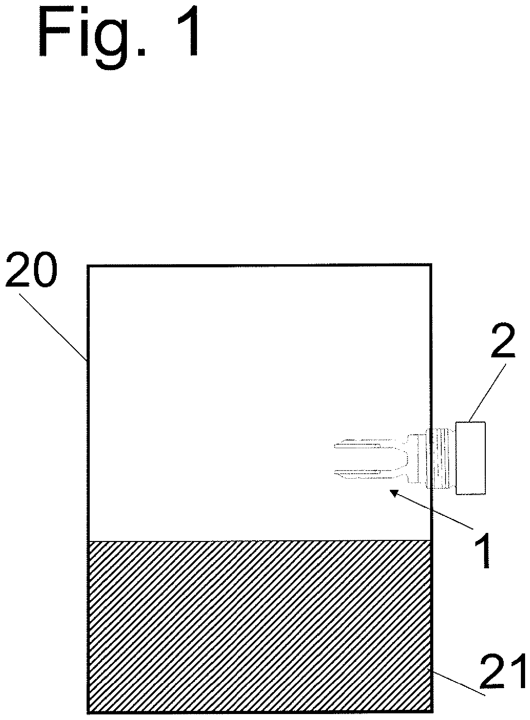

In der Fig. 1 ist das Beispiel gezeigt, dass ein Sensor als Grenzstandschalter verwendet wird. Die mechanisch schwingfähige Einheit 1 ist dabei eine sog. Schwinggabel, d.h. zwei Gabelzinken sind an einer Membran befestigt. Die Gabelzinken reichen in den Innenraum des Behälters 20 hinein, innerhalb dessen sich das Medium 21 befindet, welches beispielsweise eine Flüssigkeit ist, aber auch ein Schüttgut sein kann. Erreicht das Medium 21 die mechanisch schwingfähige Einheit 1, so beeinflusst es die Schwingungen, was sich beispielsweise in einer Veränderung der Frequenz und/oder der Amplitude zeigt. Die Wechselwirkung zwischen Medium 21 und schwingfähiger Einheit 1 erlaubt dabei beispielsweise auch die Bestimmung bzw. Überwachung solcher Prozessgrößen wie Dichte oder Viskosität, wobei bei diesen Messung der Grad der Bedeckung durch das Medium bekannt sein sollte.

Außerhalb des Behälters 20 befindet sich hier auch das Gehäuse 2, in welchem sich die Wandeleinheit und beispielsweise auch die Elektronik befindet, welche für die Rückkopplung und für die Verarbeitung der Schwingungen sorgt.

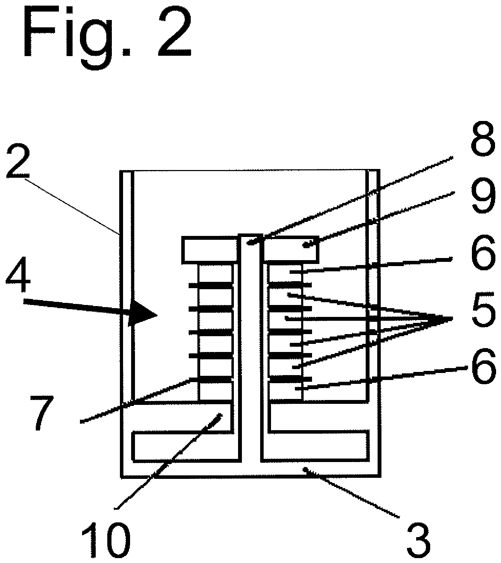

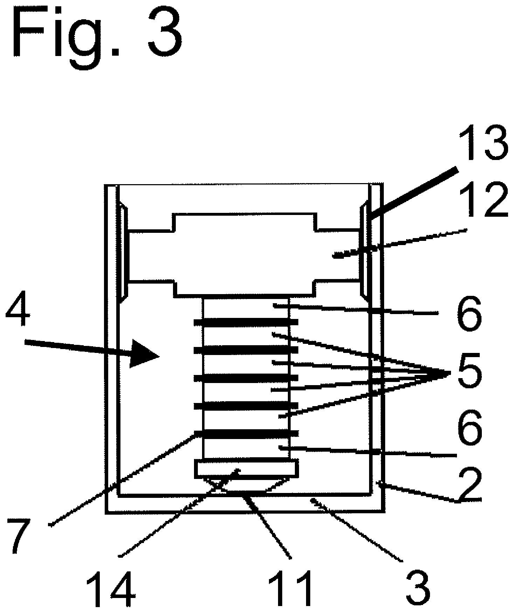

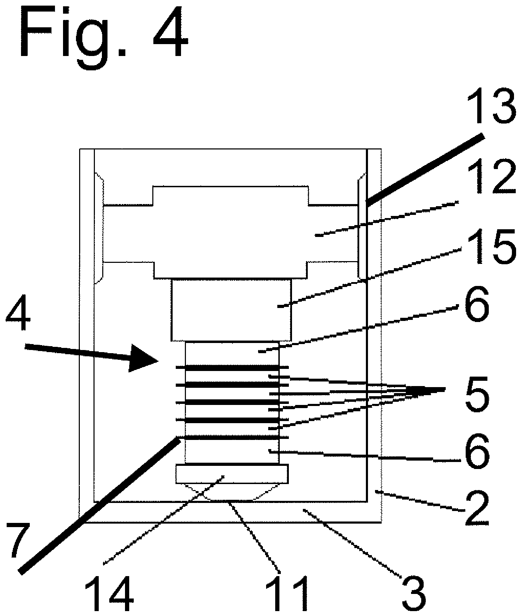

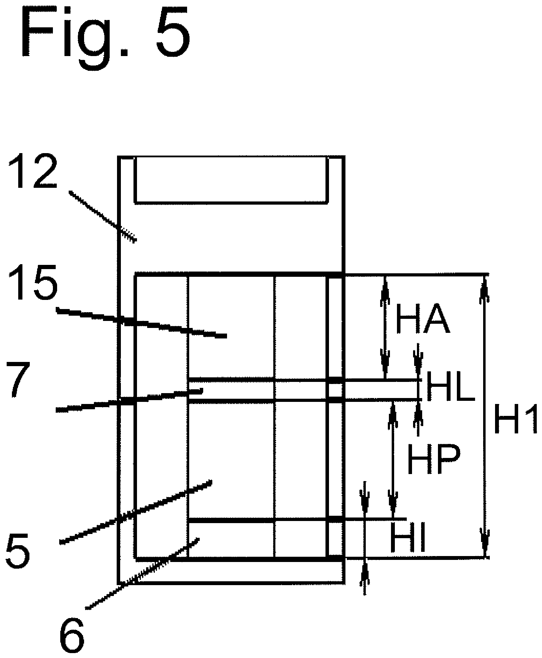

Die Abbildungen Fig. 2 und Fig. 3 zeigen zwei typische Konstruktionen der Piezoantriebe für Vibrationssensoren. Diese Skizzen zeigen schematisch die wichtigsten Konstruktionselemente der Antriebsumgebung. Von der mechanisch schwingfähigen Einheit ist hier jeweils nur eine Membran 3 dargestellt, welche selbst die schwingfähige Einheit sein kann (z.B. als Biegemoden-Resonator) oder an welcher die Gabelzinken der Schwinggabel angebracht sind. Die schwingfähige Einheit kann überdies auch ein sog. Einstab sein. Hier wird somit im Wesentlichen nur das Grundprinzip gezeigt: Die Wandlereinheit 4 befindet sich innerhalb des Gehäuses 2 und wird gegen einen Teil des Gehäuses 2 gedrückt, damit die erforderliche durch den aufgebrachten Druck erzeugte Vorspannung gegeben ist. Gezeigt wird in diesem und auch den anderen Abbildungen Fig. 4 und Fig. 5 jeweils ein Schnitt durch das beispielsweise rotationssymmetrisch und somit auch becherförmige Gehäuse 2.

In der Fig. 2 ist ein Aufbau einer Wandlereinheit 4 mit piezoelektrischen Elementen in Form von keramischen Ringen zu sehen. Die ringförmigen piezoelektrischen Elemente 5 und Isolierelemente 6 sind mit Lötfahnen 7 auf einem Stehbolzen 8 gestapelt und mit einer Mutter 9 zusammen gegenüber dem Auflagebereich 10 gespannt. Die Membran 3 und der Auflagebereich oder Auflagetisch 10 bilden für die hier im Wesentlichen als Piezostapel ausgestaltete Wandlereinheit 4 ein Federelement, das die erforderliche mechanische Vorspannung in das Gehäuse 2 leitet.

Die Fig. 3 zeigt die Antriebskonstruktion mit einem Festpunkt 11 auf der Membran 3 und einem Joch 12, welches auf einer Auflage bzw. einem Auflagebereich 13 des Sensorgehäuses 2 ruht. Die Wandlereinheit 4 ist hierbei als monolithischer Block mit scheibenförmigen piezoelektrischen Elementen 5, scheibenförmigen Isolierelementen 6, sowie den einzelnen Lötfahnen 7 ausgestaltet. Die Wandlereinheit 4 ruht dabei über einen metallischen Stempel 14 auf der Membran 3 und ist insgesamt zwischen der Membran 3 und dem Joch 12 vorgespannt, wobei die Membran 3 in dieser Konstruktion auch als Federelement dient.

Die beiden Aufbauarten des Standes der Technik der Fig. 2 und der Fig. 3 machen eine hohe mechanische Vorspannung im Piezoantrieb bzw. in der Wandlereinheit 4 erforderlich, wobei die Vorspannung durch ein Federelement - hier in Form der Membran 3 (Fig. 3) bzw. der Verbindung aus Membran 3 und dem Auflagebereich 10 (Fig. 2) - bestimmt ist. Die Vorspannung wird typischerweise mit einem Bolzen 8, einer Madenschraube oder einer Mutter 9 eingestellt, d.h. bei der Fertigung wird üblicherweise ein gewisser Druck eingestellt, welcher die gewünschte Vorspannung bewirkt. Dabei soll dafür gesorgt werden, dass die Membran 3 und andere Befestigungselemente, wie z.B. das Joch 12, mechanisch nicht überlasteten werden. Falls die mechanische Spannung in den betroffenen Teilen die jeweilige Streckgrenze übersteigt, werden die metallischen Teile plastisch verformt, was Sensorausfälle verursachen kann.

Besonders kritisch ist insbesondere das Temperaturverhalten des Stapelpiezoantriebs 4. Die keramischen Werkstoffe weisen üblicherweise deutlich geringere Temperaturausdehnungskoeffizienten auf als die Stahllegierungen, welche für das Gehäuse 2 bzw. beispielsweise für den Bolzen 8 verwendet werden. Bei erhöhten Temperaturen dehnen sich ein metallisches Sensorgehäuse und die metallischen Befestigungselemente stärker aus als die Keramik im Piezostapel. Dies führt zu einer Herabsetzung der Vorspannung. Besonders auffällig ist dieser Effekt bei der Variante mit Stehbolzen (Fig. 2), wenn ein äußerer Druck lastet, da der äußere Druck zu einem weiteren Entspannen des Antriebs führt.

In den Abbildungen Fig. 4 und Fig. 5 ist daher die erfindungsgemäße Lösung der Problematik gezeigt.

Die Erfindung begegnet dem Verlust der mechanischen Vorspannung in einem Piezoantrieb bei hohen Temperaturen von bis zu 400°C. Das Ziel wird dabei durch ein zusätzliches Konstruktionselement in Form eines Ausgleichselements erreicht. Das Konstruktionselement im Form von einem Ring, einer Scheibe oder einer Lasche besteht dabei aus einem Material, das vorzugsweise einen hohen Temperaturausdehnungskoeffizienten (TKE) aufweist. Dabei soll der TKE des Konstruktionselements größer sein als der TKE des Materials, aus welchem das Gehäuse bzw. aus dem der Bolzen besteht, je nachdem, welches Element bestimmend für die Einspannung und die Erzeugung der Vorspannung ist.

Mit anderen Worten:

Die Wandlereinheit ist zwischen zwei Elementen (in der Fig. 2 ist dies die Mutter 9 und der Auflagebereich 10 und in der Fig. 3 ist dies das Joch 13 und die Membran 3) derartig eingespannt, dass längs einer imaginären Achse (bei der Fig. 2 und Fig. 3 ist dies jeweils die Senkrechte auf der Membranebene) ein Druck auf der Wandlereinheit lastet, welcher einer bei der Fertigung vorgebbaren Vorspannung entspricht. Zusätzlich ist erfindungsgemäß ein Ausgleichselement vorgesehen, dessen TKE zumindest höher als der TKE der keramischen Elemente der Wandlereinheit ist. Der Druck auf die Wandlereinheit ist insbesondere abhängig vom Abstand längs der imaginären Achse zwischen den beiden Elementen, zwischen denen die Wandlereinheit eingespannt ist. Aufgrund der Temperatur kann sich dieser Abstand ändern und bei steigender Temperatur insbesondere größer werden. Wesentliche Abschnitte sind dabei z.B. der Bolzen 8 der Variante der Fig. 1 bzw. der Gehäuseabschnitt zwischen Membran 3 und Auflage 13 des Jochs 12 der Variante der Fig. 3. Um die Vorspannung zu halten, sollte daher der TKE des Ausgleichselements wenigstens gleich dem TKE oder größer als der TKE dieser zu kompensierenden Elemente bzw. Bestandteile des jeweiligen Gehäuses (z.B. Bolzen, Gehäuseelemente o.ä.) sein.

Die Fig. 4 zeigt die Variante der Fig. 3 mit einem Ausgleichselement 15, welches Differenzen in der thermischen Ausdehnung des Gehäuses 2 und der keramischen Scheiben der Wandlereinheit 4 ausgleichen soll. Das Ausgleichselement 15 kann auch aus einem Material mit einem erhöhten TKE gemacht werden, sowie aus einem Edelstahl. Dabei muss der Kompensationseffekt nicht unbedingt vollständig sein, ggf. ist es ausreichend, wenn der auf der Wandlereinheit 4 lastende Druck nicht unter einen minimal erforderlichen Vorspannungs-Grenzwert fällt. Bedingt durch die Ausgestaltung der Membran 3 und deren elastischen Eigenschaften ergeben sich auch Zusammenwirkungen, welche ebenfalls positiv auf die Vorspannung einwirken können.

In der Fig. 5 ist eine vereinfachte Darstellung des Aufbaus der Fig. 4 dargestellt. Hier wurden für eine Berechnung der Größenverhältnisse die piezoelektrischen Elemente, die Isolierelemente und die Lötfahnen jeweils zu einem Element zusammengefasst.

Insgesamt ergeben sich:

ein Block aus einer piezoelektrischen Keramik 5 mit der Höhe HP, welcher der gesamten Höhe von allen in der Wandlereinheit verwendeten Piezoscheiben entspricht, und dem TKE $\alpha P$;

ein Block aus Isolierkeramik 6 mit einer Höhe HI entsprechend der Gesamthöhe aller Isolierscheiben und dem TKE $\alpha I$;

ein Block beispielsweise aus Bronze oder Messing 7 mit einer Höhe HL, die der gesamten Höhe aller Lötfahnen entspricht, und TKE $\alpha L$; und

schließlich ein Block für das Ausgleichselement 15 mit der Höhe HA und einem TKE $\alpha A$.

Das Ausgleichselement 15 kann dabei auch aus mehreren Scheiben bzw. Ringen bestehen.

Diese Blöcke sollen im Idealfall die gleiche thermische Ausdehnung aufweisen wie die Temperaturausdehnung der Höhe H1 des Gehäuses zwischen Membran und Auflage des Jochs 12. Das Material des Gehäuses soll dabei den TKE $\alpha 1$ aufweisen.

Bezüglich der Ausdehnung als Produkt aus Höhe und TKE soll somit gelten, dass die Ausdehnung des Gehäuses gleich der Summe der einzelnen Ausdehnungsstrecken der Blöcke ist:

Somit gilt:

$$H1 * \alpha 1 = HP * \alpha P + HI * \alpha I + HL * \alpha L + HA * \alpha A$$

Für die einzelnen Höhen gilt weiterhin als Anfangsbedingung:

$$H1 = (HP + HI + HL + HA)$$

Damit ergibt sich dann für die erforderliche Höhe des Ausgleichselements insgesamt:

$$HA = \frac{(HP + HI + HL) * \alpha 1 - (HP * \alpha P + HI * \alpha I + HL * \alpha L)}{\alpha A - \alpha 1}$$

Somit lässt sich je nach Aufbau der Wandlereinheit und der Art des Gehäuses bzw. des zu kompensierenden Elements die optimal Höhe für einen vollständigen Ausgleich berechnen. Ist der diskutierte Vorspannungs-Grenzwert ausreichend, so ist entsprechend zu dimensionieren.

Als Beispiel sei genannt ein Piezoantrieb aus sechs Piezoscheiben, je 0,5 mm Höhe, zwei Isolierscheiben aus Aluminiumoxid, je 2 mm dick und sieben Lötfahnen aus Bronze, je 0,15 mm dick. Das Sensorgehäuse bestehe dabei aus Edelstahl 1.4435 (316L).

Um eine Temperaturausdehnung bis 300°C zu kompensieren, käme für das Ausgleichselement eine Aluminiumlegierung oder Magnesiumlegierung in Frage. Die zugehörigen TKW-Werte sind 26 * 10$^{-6}$ * 1/°C für die Aluminium- und 28 * 10$^{-6}$ * 1/°C für die Magnesiumlegierung.

Als Höhe des Ausgleichselements ergibt sich damit 7,66 mm für die Aluminium- und 6,27 mm für die Magnesiumlegierung.

Die berechneten Höhen für das Ausgleichselement entsprechen dabei der optimalen, d.h. der im Wesentlichen vollständigen Kompensation. Die mit einem solchen Ausgleichselement erweiterten Piezoantriebe weisen eine stabile mechanische Vorspannung auf, die von der Temperatur fast unabhängig ist. Damit kann die Sicherheit und Zuverlässigkeit des Sensors in einem breiten Temperaturbereich deutlich verbessert werden.

**Bezugszeichenliste**

1    Mechanisch schwingfähige Einheit

| | |
|---|---|
| 2 | Gehäuse |
| 3 | Membran |
| 4 | Wandlereinheit |
| 5 | Piezoelektrisches Element |
| 6 | Isolierelement |
| 7 | Lötfahne |
| 8 | Bolzen |
| 9 | Mutter |
| 10 | Auflagebereich |
| 11 | Festpunkt |
| 12 | Joch |
| 13 | Auflage |
| 14 | Stempel |
| 15 | Ausgleichselement |
| 20 | Behälter |
| 21 | Medium |

**Patentansprüche**

1. Vorrichtung zur Bestimmung und/oder Überwachung mindestens einer Prozessgröße eines Mediums (21),
   mit mindestens einem Gehäuse (2),
   mit mindestens einer mechanisch schwingfähigen Einheit (1),
   und
   mit mindestens einer Wandlereinheit (4), welche die mechanisch schwingfähige Einheit (1) zu mechanischen Schwingungen anregt und welche von der mechanisch schwingfähigen Einheit (1) mechanische Schwingungen empfängt, wobei die Wandlereinheit (4) derartig zwischen mindestens zwei der Einspannung dienenden Gehäuseelementen (12; 3) angeordnet und eingespannt ist, dass mindestens längs einer imaginären Achse ein vorgebbarer Druck auf die Wandlereinheit (4) einwirkt, **dadurch gekennzeichnet,**
   **dass** mindestens ein Ausgleichselement (15) vorhanden ist,
   wobei der Temperaturausdehnungskoeffizient des Ausgleichselements (15) und die Höhe des Ausgleichselements (15) längs der imaginären Achse derartig gewählt sind dass eine Temperaturbedingte Ausdehnung des Ausgleichselements (15) längs der imaginären Achse während einer Temperaturbedingen Ausdehnung eines zu kompensierenden Gehäuseelements (2), welches einen Abstand zwischen den der Einspannung dienenden Gehäuseelementen längs der imaginären Achse bestimmt, und durch welche temperaturbedinge Ausdehnung des zu kompensierenden Gehäuseelements sich eine Änderung eines Abstands zwischen den der Einspannung dienenden Gehäuseelementen (12, 3) ergibt, dazu führt, dass der längs der imaginären Achse auf die Wandlereinheit (4) einwirkende Druck im Wesentlichen größer als oder gleich einem vorgebbaren Vorspannungs-Grenzwert ist,
   und
   **dass** der Temperaturausdehnungskoeffizient des Ausgleichselements (15) und die Höhe des Ausgleichselements (15) längs der imaginären Achse derartig gewählt sind/ist, dass die Temperaturbedingte Ausdehnung des Ausgleichselements (15) längs der imaginären Achse im Wesentlichen gleich der Temperaturbedingten Ausdehnung des zu kompensierenden Gehäuseelements (2) längs der imaginären Achse ist, und
   **dass** das Ausgleichselement (15) ein solches Ausdehnungsverhalten zeigt, dass es die Wandlereinheit (4) an die Ausdehnung des Gehäuses (2) und damit an den geänderten Abstand zwischen den der Einspannung dienenden Gehäuseelementen (12, 3) anpasst.

2. Vorrichtung nach Anspruch 1,
   **dadurch gekennzeichnet,**
   **dass** der Temperaturausdehnungskoeffizient des Ausgleichselements (15) im Wesentlichen gleich oder größer als der Temperaturausdehnungskoeffizient des zu kompensierenden Gehäuseelements (2) ist.

3. Vorrichtung nach Anspruch 1 oder 2,
   **dadurch gekennzeichnet,**
   **dass** die Wandlereinheit (4) längs eines Bolzens (8) zwischen einer Membran (3) und einer Mutter (9) oder zwischen einem Auflagebereich (10) und einer Mutter (9) angeordnet und eingespannt ist,
   und
   **dass** das zu kompensierende Gehäuseelement (8) der Bolzen ist.

4. Vorrichtung nach Anspruch 1 oder 2,
**dadurch gekennzeichnet,**
**dass** die Wandlereinheit zwischen einer Membran (3) und einem Joch (12) angeordnet und eingespannt ist, und
**dass** das zu kompensierende Gehäuseelement ein Gehäuseabschnitt zwischen der Membran (3) und einer Auflage (13) des Jochs (12) am Gehäuse (2) parallel zur imaginären Achse ist.

5. Vorrichtung nach mindestens einem der Ansprüche 1 bis 4,
**dadurch gekennzeichnet,**
**dass** das Ausgleichselement (15) längs der imaginären Achse zwischen den mindestens zwei Gehäuseelementen (12; 3; 10), zwischen denen die Wandlereinheit (4) angeordnet ist, angeordnet ist.

6. Vorrichtung nach einem der Ansprüche 1 bis 5,
**dadurch gekennzeichnet,**
**dass** die Höhe längs der imaginären Achse des Ausgleichselements (15) im Wesentlichen durch folgende Formel gegeben ist:

$$HA = HW * \frac{\alpha 1 - \alpha W}{\alpha A - \alpha 1} \, ,$$

dabei ist HA die Höhe des Ausgleichselements (15) längs der imaginären Achse,
dabei ist HW die Höhe der Wandlereinheit (4) längs der imaginären Achse,
dabei ist a1 der Temperaturausdehnungskoeffizient des zu kompensierenden Gehäuseelements (2), dabei ist aW der Temperaturausdehnungskoeffizient des Wandlerelements (4), und
dabei ist aA der Temperaturausdehnungskoeffizient des Ausgleichselements (15).

7. Vorrichtung nach mindestens einem der Ansprüche 1 bis 6,
**dadurch gekennzeichnet,**
**dass** die Wandlereinheit (4) als Stapel ausgestaltet ist, welcher mindestens ein piezoelektrisches Element (5) aufweist.

8. Vorrichtung nach mindestens einem der Ansprüche 1 bis 7,
**dadurch gekennzeichnet,**
**dass** mindestens ein Isolierelement (6) vorhanden ist.

9. Vorrichtung nach mindestens einem der Ansprüche 1 bis 8,
**dadurch gekennzeichnet,**
**dass** die Wandlereinheit (4) mindestens eine Lötfahne (7) aufweist.

10. Vorrichtung nach Anspruch 9,
**dadurch gekennzeichnet,**
**dass** die Höhe längs der imaginären Achse des Ausgleichselements (15) im Wesentlichen durch folgende Formel gegeben ist:

$$HA = \frac{(HP + HI + HL) * \alpha 1 - (HP * \alpha P + HI * \alpha I + HL * \alpha L)}{\alpha A - \alpha 1} \, ,$$

dabei ist HA die Höhe des Ausgleichselements (15) längs der imaginären Achse,
dabei ist HP die Höhe des mindestens einen piezoelektrischen Elements (5) längs der imaginären Achse,
dabei ist HI die Höhe des mindestens einen Isolierelements (6) längs der imaginären Achse,
dabei ist HL die Höhe der mindestens einen Lötfahne (7) längs der imaginären Achse,
dabei ist $\alpha 1$ der Temperaturausdehnungskoeffizient des zu kompensierenden Gehäuseelements (2),
dabei ist $\alpha P$ der Temperaturausdehnungskoeffizient des mindestens einen piezoelektrischen Elements (5),
dabei ist $\alpha I$ der Temperaturausdehnungskoeffizient des mindestens einen Isolierelements (6),
dabei ist $\alpha L$ der Temperaturausdehnungskoeffizient der mindestens einen Lötfahne (7), und
dabei ist $\alpha A$ der Temperaturausdehnungskoeffizient des Ausgleichselements (15).

**Claims**

1. Apparatus designed to determine and/or monitor at least a process variable of a medium (21),
   with at least a housing (2),
   with at least a unit capable of vibrating mechanically (1),
   and
   with at least a transducer unit (4), which excites the unit capable of vibrating mechanically (1) to perform mechanical vibrations and which receives mechanical vibrations from the unit capable of vibrating mechanically (1),
   wherein the transducer unit (4) is arranged and clamped between at least two housing elements (12, 3) used for clamping in such a way that a pre-definable pressure acts on the transducer unit (4) at least along an imaginary axis, **characterized in that**
   at least one compensation element (15) is provided,
   wherein the temperature expansion coefficient of the compensation element (15) and the height of the compensation element (15) along the imaginary axis are selected in such a way that a temperature-related expansion of the compensation element (15) along the imaginary axis - during a temperature-related expansion of a housing element (2) to be compensated, which determines a distance between the housing elements, used for clamping, along the imaginary axis, and wherein said temperature-related expansion of the housing element to be compensated results in a modification of the distance between the housing element (12, 3) used for clamping - results in the fact that the pressure acting on the transducer unit (4) along the imaginary axis is essentially greater than or equal to a pre-definable pretension limit value, and
   that the temperature expansion coefficient of the compensation element (15) and the height of the compensation element (15) along the imaginary axis is/are selected in such a way that the temperature-related expansion of the compensation element (15) along the imaginary axis is essentially equal to the temperature-related expansion of the housing element (2) to be compensated along the imaginary axis, and
   that the compensation element (15) presents such an expansion behavior that it adapts the transducer unit (4) to the expansion of the housing (2) and, consequently, to the modified distance between the housing elements (12, 3) used for clamping.

2. Apparatus as claimed in Claim 1,
   **characterized in that**
   the temperature expansion coefficient of the compensation element (15) is essentially equal to or greater than the temperature expansion coefficient of the housing element (2) to be compensated.

3. Apparatus as claimed in Claim 1 or 2,
   **characterized in that**
   the transducer unit (4) is arranged and clamped along a bolt (8) between a membrane (3) and a nut (9) or between a support area (10) and a nut (9), and
   **in that** the housing element (8) to be compensated is the bolt.

4. Apparatus as claimed in Claim 1 or 2,
   **characterized in that**
   the transducer unit is arranged and clamped between a membrane (3) and a yoke (12),
   and
   **in that** the housing element to be compensated is a housing section between the membrane (3) and a support (13) of the yoke (12) on the housing (2), said section being parallel to the imaginary axis.

5. Apparatus as claimed in at least one of the Claims 1 to 4,
   **characterized in that**
   the compensation element (15) is arranged along the imaginary axis between the at least two housing elements (12, 3, 10), between which the transducer unit (4) is arranged.

6. Apparatus as claimed in at least one of the Claims 1 to 5,
   **characterized in that**
   the height along the imaginary axis of the compensation element (15) is essentially given by the following formula:

$$HA = HW * \frac{\alpha 1 - \alpha W}{\alpha A - \alpha 1},$$

where HA is the height of the compensation element (15) along the imaginary axis,
where HW is the height of the transducer unit (4) along the imaginary axis, where $\alpha 1$ is the temperature expansion coefficient of the housing element (2) to be compensated,
where $\alpha W$ is the temperature expansion coefficient of the transducer unit (4), and
where $\alpha A$ is the temperature expansion coefficient of the compensation element (15).

**7.** Apparatus as claimed in at least one of the Claims 1 to 6,
**characterized in that**
the transducer unit (4) is designed as a stack which has at least one piezoelectric element (5).

**8.** Apparatus as claimed in at least one of the Claims 1 to 7,
**characterized in that**
at least one isolation element (6) is provided.

**9.** Apparatus as claimed in at least one of the Claims 1 to 8,
**characterized in that**
the transducer unit (4) features at least a soldering lug (7).

**10.** Apparatus as claimed in Claim 9,
**characterized in that**
the height along the imaginary axis of the compensation element (15) is essentially given by the following formula:

$$HA = \frac{(HP + HI + HL)*\alpha 1 - (HP*\alpha P + HI*\alpha I + HL*\alpha L)}{\alpha A - \alpha 1},$$

where HA is the height of the compensation element (15) along the imaginary axis,
where HP is the height of the at least one piezoelectric element (5) along the imaginary axis,
where HI is the height of the at least one isolation element (6) along the imaginary axis,
where HL is the height of the at least one soldering lug (7) along the imaginary axis,
where a1 is the temperature expansion coefficient of the housing element (2) to be compensated,
where aP is the temperature expansion coefficient of the at least one piezoelectric element (5),
where $\alpha I$ is the temperature expansion coefficient of the at least one isolation element (6),
where $\alpha L$ is the temperature expansion coefficient of the at least one soldering lug (7),
and
where $\alpha A$ is the temperature expansion coefficient of the compensation element (15).

**Revendications**

**1.** Dispositif destiné à la détermination et/ou à la surveillance d'au moins une grandeur de process d'un produit (21),
avec au moins un boîtier (2),
avec au moins une unité apte à vibrer mécaniquement (1),
et
avec au moins une unité de transducteur (4), qui excite l'unité apte à vibrer mécaniquement (1) en vibrations mécaniques et qui reçoit les vibrations mécaniques de l'unité apte à vibrer mécaniquement (1),
l'unité de transducteur (4) étant disposée et serrée entre au moins deux éléments de boîtier (12, 3) servant au serrage, de telle sorte qu'une pression prédéfinissable agit sur l'unité de transducteur (4) au moins le long d'un axe imaginaire,
**caractérisé**
**en ce qu'**au moins un élément de compensation (15) est prévu,
le coefficient de dilatation thermique de l'élément de compensation (15) et la hauteur de l'élément de compensation (15) le long de l'axe imaginaire étant choisis de telle sorte qu'une dilatation due à la température de l'élément de compensation (15) le long de l'axe imaginaire - lors d'une dilatation due à la température d'un élément de boîtier (2) à compenser, qui détermine une distance entre les éléments de boîtier servant au serrage le long de l'axe imaginaire, et par laquelle la dilatation due à la température de l'élément de boîtier à compenser entraîne une modification de la distance entre les éléments de boîtier (12, 3) servant au serrage - fait en sorte que la pression agissant le long de l'axe imaginaire sur l'unité de transducteur (4) est pour l'essentiel supérieure ou égale à une valeur limite de précharge prédéfinissable, et

**en ce que** le coefficient de dilatation thermique de l'élément de compensation (15) et la hauteur de l'élément de compensation (15) le long de l'axe imaginaire sont choisis de telle sorte que la dilatation due à la température de l'élément de compensation (15) le long de l'axe imaginaire est pour l'essentiel égale à la dilatation due à la température de l'élément de boîtier (2) à compenser le long de l'axe imaginaire, et

**en ce que** l'élément de compensation (15) présente un comportement de dilatation tel qu'il adapte l'unité de transducteur (4) à la dilatation du boîtier (2) et, par conséquent, à la modification de la distance entre les éléments de boîtier (12, 3) servant au serrage.

2. Dispositif selon la revendication 1,
   **caractérisé**
   **en ce que** le coefficient de dilatation thermique de l'élément de compensation (15) est pour l'essentiel égal ou supérieur au coefficient de dilatation thermique de l'élément de boîtier (2) à compenser.

3. Dispositif selon la revendication 1 ou 2,
   **caractérisé**
   **en ce que** l'unité de transducteur (4) est disposée et serrée le long d'un boulon (8) entre une membrane (3) et un écrou (9) ou entre une zone d'appui (10) et un écrou (9), et
   **en ce que** l'élément de boîtier (8) à compenser est le boulon.

4. Dispositif selon la revendication 1 ou 2,
   **caractérisé**
   **en ce que** l'unité de transducteur est disposée et serrée entre une membrane (3) et une entretoise (12), et
   **en ce que** l'élément de boîtier à compenser est une section de boîtier entre la membrane (3) et un support (13) de l'entretoise (12) sur le boîtier (2), laquelle section est parallèle à l'axe imaginaire.

5. Dispositif selon au moins l'une des revendications 1 à 4,
   **caractérisé**
   **en ce que** l'élément de compensation (15) est disposé le long de l'axe imaginaire entre les au moins deux éléments de boîtier (12, 3, 10), entre lesquels l'unité de transducteur (4) est disposée.

6. Dispositif selon au moins l'une des revendications 1 à 5,
   **caractérisé**
   **en ce que** la hauteur le long de l'axe imaginaire de l'élément de compensation (15) est pour l'essentiel donnée par la formule suivante :

$$HA = HW * \frac{\alpha 1 - \alpha W}{\alpha A - \alpha 1},$$

où HA est la hauteur de l'élément de compensation (15) le long de l'axe imaginaire,

où HW est la hauteur de l'unité de transducteur (4) le long de l'axe imaginaire,

où $\alpha 1$ est le coefficient de dilatation thermique de l'élément de boîtier (2) à compenser,

où $\alpha W$ est le coefficient de dilatation thermique de l'unité de transducteur (4), et

où $\alpha A$ est le coefficient de dilatation thermique de l'élément compensateur (15).

7. Dispositif selon au moins l'une des revendications 1 à 6,
   **caractérisé**
   **en ce que** l'unité de transducteur (4) est conçue comme une pile qui comporte au moins un élément piézoélectrique (5).

8. Dispositif selon au moins l'une des revendications 1 à 7,
   **caractérisé**
   **en ce qu'**au moins un élément isolant (6) est prévu.

9. Dispositif selon au moins l'une des revendications 1 à 8,

**caractérisé**
**en ce que** l'unité de transducteur (4) comprend au moins une patte à souder (7).

10. Dispositif selon la revendication 9,
**caractérisé**
**en ce que** la hauteur le long de l'axe imaginaire de l'élément de compensation (15) est pour l'essentiel donnée par la formule suivante :

$$HA = \frac{(HP + HI + HL) * \alpha 1 - (HP * \alpha P + HI * \alpha I + HL * \alpha L)}{\alpha A - \alpha 1} \; ,$$

où HA est la hauteur de l'élément de compensation (15) le long de l'axe imaginaire,
où HP est la hauteur de l'au moins un élément piézoélectrique (5) le long de l'axe imaginaire,
où HI est la hauteur de l'au moins un élément isolant (6) le long de l'axe imaginaire,
où HL est la hauteur de l'au moins une patte à souder (7) le long de l'axe imaginaire,
où $\alpha 1$ est le coefficient de dilatation thermique de l'élément de boîtier (2) à compenser,
où $\alpha P$ est le coefficient de dilatation thermique de l'au moins un élément piézoélectrique (5),
où $\alpha I$ est le coefficient de dilatation thermique de l'au moins un élément isolant (6),
où $\alpha L$ est le coefficient de dilatation thermique de l'au moins une patte à souder (7),
et
où $\alpha A$ est le coefficient de dilatation thermique de l'élément de compensation (15).

# Fig. 1

# Fig. 2

# Fig. 3

# Fig. 4

# Fig. 5

**EP 2 344 850 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0444173 B1
- WO 2004094964 A1
- EP 1325301 A
- DE 1773815
- DE 3348119
- DE 4118793
- DE 3931453
- DE 10023302
- DE 4201360

- DE 102004009495
- DE 102006046251
- DE 10321025
- DE 10129556
- EP 1134038 A
- GB 2351805 A
- DE 102004033311 A1
- US 2004056612 A1